# EUROPÄISCHE PATENTSCHRIFT

(11) **EP 2 801 839 B1**
(45) Veröffentlichungstag und Bekanntmachung des Hinweises auf die Patenterteilung: **04.03.2020**
(21) Anmeldenummer: 13167394.9
(22) Anmeldetag: 10.05.2013
(51) Int. Cl.: G01S 5/16, G01S 17/66, G01S 7/481, G01C 15/00, G01B 11/00

(54) **Handhaltbares Messhilfsmittel zur Verwendung mit einem 6-DoF-Lasertracker**
Handheld measuring aid for use with a 6-DoF laser tracker
Outil d'aide à la mesure pouvant être tenu à la main destiné à être utilisé avec un appareil de suivi laser 6 DoF

(43) Veröffentlichungstag der Anmeldung: 12.11.2014
(73) Patentinhaber: Leica Geosystems AG, 9435 Heerbrugg (CH)
(72) Erfinder: Lettau, Michael, 79725 Laufenburg (DE); Lüscher, Marco, 5200 Brugg (CH); Böckem, Burkhard, 5415 Rieden (CH)
(74) Vertreter: Kaminski Harmann

(56) Entgegenhaltungen:
- EP-A1- 1 498 688
- EP-A1- 2 246 005
- EP-A2- 0 797 076
- WO-A1-97/14015
- US-A1- 2008 111 985
- US-A1- 2010 091 112
- US-A1- 2011 119 025
- US-A1- 2012 262 550

## Beschreibung

Die Erfindung betrifft ein handhaltbares Messhilfsmittel zur Verwendung in einem - eine Station zur Positions- und Orientierungsbestimmung des Messhilfsmittels aufweisenden - System zur Vermessung von einer Objektoberfläche.

Derartige industrielle Messsysteme, die für eine koordinative Positionsbestimmung von Punkten auf einer Oberfläche ausgebildet sind und durch ein handhaltbares Messhilfsmittel in Zusammenwirkung mit einer das Messhilfsmittel im Raum vermessenden Station - wie insbesondere einem 6-DoF-Lasertracker - gebildet sind, sind aus dem Stand der Technik seit längerem bekannt.

Beispiele für derartige Systeme sind beispielsweise in den Patentliteraturdruckschriften WO 1993/07443 A1, WO 1997/14015 A1, WO 2007/124009 A2 oder WO 2007/124010 A2 beschrieben oder auch in Form der von der Leica Geosystems AG vertriebenen Produkte Lasertracker "AT901" und Messhilsfmittel "T-Probe" bekannt.

Ein solches handhaltbares Messhilfsinstrument weist dafür eine an einem Körper des Messhilfsmittels angeordnete Messsonde für die Objektoberfläche auf, insbesondere mit einer taktil zu verwendenden Kugel zum physischen Kontaktieren eines Messpunktes auf der Objektoberfläche (wobei hier durchgängig auch Einkerbungen, Löcher, versteckte Punkte, etc., als Teil der Messobjektoberfläche eines Messobjekts bildend verstanden werden sollen). Ferner sind visuelle Markierungen vorhanden, die in definierter räumlicher Beziehung zueinander und relativ zur Messsonde in einem Markierungsbereich ein Muster bildend am Körper angeordnet sind.

Die visuellen Markierungen können dabei insbesondere gegeben sein durch durch eine Kamera erfassbare, passive oder aktive Lichtpunkte, insbesondere wobei die Markierungen durch Reflektoren oder durch LEDs gebildet werden.

Die zusammen mit dem Messhilfsmittel zu verwendenden Messstationen (wie insbesondere Lasertracker) können dann zur Erfassung dieser Markierungen mit einer optischen Bilderfassungseinheit mit einem zweidimensionalen, lichtempfindlichen Array, z. B. einer CCD- oder CID-Kamera oder einer auf einem CMOS-Array basierenden Kamera (oder mit einem anderen Pixelarraysensor) und mit einer Bildverarbeitungseinheit ausgeführt sein. Die Kamera kann dabei insbesondere derart an der Station montiert sein, dass ihre Positionen relativ zueinander nicht veränderbar sind. Die Kamera ist beispielsweise derart an der Station montiert, dass diese um eine oder um zwei Achsen motorisiert schwenkbar ist und somit das Messhilfsmittel auch bei Bewegung verfolgen können, sodass dieses im Sichtbereich der Kamera bleibt.

Ein spezielles Beispiel für derartige Messstationen stellt der Lasertracker mit Kamera dar. Ein feinanzielbarer und trackbarer Zielpunkt für einen solchen Lasertracker wird dabei durch eine retro-reflektierende Einheit (z. B. Würfelprisma oder Corner Cube Retroreflektor) gebildet, die mit einem optischen Lasermessstrahl der Messvorrichtung angezielt wird. Der Laserstrahl wird durch den Retroreflektor parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Retroreflektor ermittelt, z.B. interferometerisch oder mittels Laufzeit- und/oder Phasendifferenzmessung.

Für die Zusammenwirkung eines Messhilfsmittels mit einem Lasertracker weist das Messhilfsmittel in der Regel an einer zentralen Stelle seines Markierungsbereichs einen Retroreflektor auf, der durch den Lasertracker automatisch hochpräzise angezielt, verfolgt und positionell in drei Dimensionen vermessen werden kann.

Dafür weisen Lasertracker nach dem Stand der Technik regelmässig einen Tracking-Flächensensor in Form eines positionssensitiven Flächendetektors (wie etwa eine PSD oder ein CCD- oder CMOS-Sensor) auf, wobei am Ziel reflektierte Messlaserstrahlung auf diesem detektiert und ein entsprechendes Ausgangssignal erzeugt werden kann. Mittels einer nachgeschalteten oder integrierten Elektronik kann das Ausgangssignal ausgewertet und z.B. ein Schwerpunkt ermittelt werden. Mittels dieses Tracking- und Feinanzielsensors kann also eine Ablage des Auftreffpunkts (Schwerpunkts) des erfassten Strahls von einem Servokontroll-Nullpunkt bestimmt und auf Basis der Ablage ein präzises Anzielen bzw. - bei Bewegung - ein Nachführen des Laserstahls auf den Retroreflektor erfolgen. Eine Erfassung mit dem Tracking- und Feinanzielsensor erfolgt koaxial zur Messachse, sodass die Erfassungsrichtung der Messrichtung entspricht. Die Anwendung des Trackings- und der Feinanzielung kann erst erfolgen, nachdem der Messlaser zumindest derart grob auf ein retro-reflektierendes Ziel ausgerichtet worden ist, dass der Retroreflektor durch den Messlaserstrahl (zumindest irgendwo im Strahlquerschnitt des Messlaserstrahls betrachtet) getroffen wird. Nach präziser Anzielung erfolgt - wie obig beschrieben - zur eigentlichen Vermessung des Retroreflektors eine Winkel- und Distanzmessung.

Die weiteren drei Freiheitsgrade des Messhilfsmittels werden durch Aufnahme eines Bildes von den Markierungen und entsprechender Bildverarbeitung bestimmt. Die den Laserstrahl lenkende Einheit und die Kamera können dabei insbesondere derart gebildet sein, dass ihre Positionen relativ zueinander nicht veränderbar sind. Die Kamera ist beispielsweise zusammen mit der Einheit um eine im Wesentlichen senkrechte Achse drehbar, jedoch unabhängig von der Lenkeinheit auf und ab schwenkbar und somit insbesondere von der Optik des Laserstrahls getrennt angeordnet. Alternativ kann die Kamera auch nur um eine Achse schwenkbar ausgeführt sein. Weiters alternativ kann jedoch auch die Kamera in integrierter Bauweise mit der strahllenkenden Einheit zusammen in einem dreh- und schwenkbaren gemeinsamen Gehäuse verbaut sein.

Mit dem Erfassen und Auswerten des Bildes - mittels Bilderfassungs- und Bildverarbeitungseinheit - von den visuellen Markierungen, deren relative Lage zueinander bekannt ist, kann also auf die Orientierung des Messhilfsinstruments im Raum geschlossen werden. Zusammen mit der bestimmten räumlichen Position des Retroreflektors kann somit also die Position und Orientierung des Messhilfsmittels im Raum absolut (bzw. zumindest relativ zum Lasertracker) - und somit letztendlich der durch die Sonde des Messhilfsinstruments taktil oder optisch kontaktierte Oberflächenpunkt - präzise bestimmt werden.

Alternativ zur Verwendung eines Lasertrackers als Vermessungsstation für das Messhilfsmittel kann die Station auch derart ausgestaltet sein, dass eine sechsfreiheitsgradige Vermessung des Messhilfsmittels auch rein kamerabasiert erfolgen kann, wie dies in den oben bereits erwähnten Patentliteraturdruckschriften WO 2007/124009 A2 oder WO 2007/124010 A2 beschrieben steht.

Das Messhilfsinstrument kann ferner in dem Fachmann bekannter Weise auch ein von Hand gehaltener, zur Kurzdistanzmessung ausgerüsteter Scanner für berührungslose Oberflächenvermessungen sein, wobei Richtung und Position des für die Kurzdistanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben oder auch in Form des von der Leica Geosystems AG vertriebenen Produkts "T-Scan" bekannt.

Im Stand der Technik bekannte einhändig gehaltene Messhilfsinstrumente sind dabei zweiseitig konstruiert mit einer zur Messstation auszurichtenden Vorderseite, an der die visuellen Markierungen (sowie ggf. der Retroreflektor) im Markierungsbereich - alle in eine gemeinsame Richtung zeigend (-> senkrecht von der Vorderseite weg zeigend) - angeordnet sind, und einer Rückseite, an welcher ein Haltegriff zum stangenartigen umschliessenden Umgriffenwerden durch eine Hand (auch Faustgriff genannt) eines Benutzers angeordnet ist.

Für einige Anforderungen (wie etwa für spezielle Messaufgaben) kann der Faustgriff (das stangenartige Umgreifen eines solchen Griffs) jedoch Nachteile mit sich bringen.

Aufgabe der Erfindung ist daher die Bereitstellung eines Messhilfsmittels zur Verwendung in einem - eine Station zur Positions- und Orientierungsbestimmung des Messhilfsmittels aufweisenden - System zur Vermessung von einer Objektoberfläche, mit welchem Messhilfsmittel in speziellen Situationen und für spezielle Anforderungen verbessert und/oder für den Benutzer vereinfacht gearbeitet und vermessen werden kann.

Diese Aufgabe wird durch die Verwirklichung der kennzeichnenden Merkmale den unabhängigen Anspruch gelöst. Merkmale, die die Erfindung in alternativer oder vorteilhafter Weise weiterbilden, sind den abhängigen Patentansprüchen zu entnehmen.

Das die Erfindung betreffende handhaltbare Messhilfsmittel zur Verwendung in einem - eine Station zur Positions- und Orientierungsbestimmung des Messhilfsmittels aufweisenden - System zur Vermessung von einer Objektoberfläche weist dabei, wie dies im Stand der Technik dem Prinzip und der Funktion nach bekannt ist, folgende Merkmale auf:
- es ist ein Körper als Trägerkörper für die einzelnen Komponenten vorhanden,
- es sind visuellen Markierungen vorgesehen, die in definierter räumlicher Beziehung ein Muster bildend an dem Körper in einem Markierungsbereich angeordnet sind,
- es ist eine an einer Mündung des Körpers in definierter räumlicher Beziehung relativ zu dem Muster angeordnete Messsonde für die Objektoberfläche vorhanden, insbesondere mit einer taktil zu verwendenden Kugel zum physischen Kontaktieren eines Messpunktes auf der Objektoberfläche,
- es ist ein durch einen Benutzer betätigbares erstes Bedienelement am Körper angeordnet,
- es ist eine elektronische Schaltung integriert zur - in Abhängigkeit von einer Betätigung des ersten Bedienelements erfolgenden - Erzeugung eines Signals, das indikativ ist für eine Auslösung von einer durch die Station durchführbaren Positions- und Orientierungsbestimmung des Messhilfsmittels, und
- es sind kabellose Kommunikationsmittel zur Versendung des Signals an die Station vorgesehen.

Das erfindungsgemässe Messhilfsmittel löst sich jedoch nun von im Stand der Technik bekannten Messhilfsinstrumenten durch eine neuartige dimensions- und formmässige Gestalt einiger der einzelnen Funktionseinheiten und Komponenten und durch eine neuartige, geänderte Anordnungsweise bzw. raummässige Zusammensetzung von einigen der einzelnen Funktionseinheiten und Komponenten des Messhilfsmittels, sodass dadurch eine neuartige und für einige Situationen gegenüber der bisher bekannten Faustgriff-Handhabung deutlich vorteilhafte Halteweise (Greifweise) in Messverwendstellung des Messhilfsmittels ermöglicht bzw. vorgesehen ist.

Nämlich
- sind die Gesamtdimensionierung und Gewichtsverteilung des Messhilfsmittels derart ausgestaltet sowie die Anordnungslokalitäten der visuellen Markierungen am Körper derart gewählt,
- ist ein sich von der Mündung weg erstreckender erster Abschnitt des Körpers derart beschaffen, geformt und dimensioniert sowie
- ist das erste Bedienelement derart an dem ersten Abschnitt des Körpers angeordnet,
dass das Messhilfsmittel in Messstellung vorgesehen ist zum einhändigen schreibstiftartigen (also im so genannten Präzisionsgriff erfolgenden) Gehaltenwerden - wobei der erste Abschnitt als Greifbereich für zumindest Daumen und Zeigefinger (sowie insbesondere auch Mittelfinger) des Benutzers dient - sowie dass in dieser Messstellung das Bedienelement mit dem greifenden Zeigefinger oder dem greifenden Daumen betätigbar ist.

D.h., dass erfindungsgemäss an den gestalterischen Stellschrauben bzgl. Gesamtdimensionierung und Gewichtsverteilung des Messhilfsmittels, bzgl. Platzierung der Markierungsbereichs, Ausgestaltung eines ersten Abschnitts und Platzierung des ersten Bedienelements derart zu drehen ist, damit die angegebene Funktion - nämlich schreibstiftartige Greifbarkeit in Messstellung - erfüllt ist.

So ist hinsichtlich Gesamtdimensionierung zu beachten, dass diese so zu wählen ist, dass die schreibstiftartige (also im Präzisionsgriff erfolgende) Führung und Beweglichkeit des Messhilfsmittels innerhalb der Arm-Reichweite in praktisch keiner Arm-Stellung im Arm-Reichweitenvolumen durch den gewinkelten Arm selbst oder durch den Oberkörper/Kopf des Benutzers gehindert ist, also dass der - betrachtet in Messstellung mit der Mündung für die Messsonde nach unten - sich vom ersten Abschnitt weg nach oben erstreckende Oberteil des Messhilfsmittels ein Ausmass besitzt, das einerseits zwar Platz für den Markierungsbereich zur Verfügung stellt, jedoch nicht die freie Beweglichkeit (Kopf, Schulter, Arme) oder die Sicht des das Messhilfsmittel haltenden Benutzers beeinflusst. Beispielsweise weist das Oberteil eine Längsausdehnung in Richtung der Rollachse des Messhilfsinstruments von maximal 20 cm auf.

Für die Gewichtsverteilung ist insbesondere von Relevanz, dass das Oberteil gewichtsmässig derart mit dem Messsondenteil (d.h. jener Teil des Messhilfsmittels, der sich von den Fingerangreifflächen des ersten Abschnitts nach unten erstreckt) korrespondiert (d.h. dass die Teile gewichtsmässig nicht derart ungleich ausfallen), dass auch eine schräge (oder auch waagerechte) Stellung des mit drei Fingern schreibstiftartig gehaltenen Messhilfsmittels bequem einnehmbar und für einen Benutzer gut haltbar ist und dabei kein zu starkes Drehmoment durch Ungleichgewicht der beiden genannten Teile auf die haltende Hand wirkt. Dabei ist insbesondere zu berücksichtigen, dass durch die Hebelwirkung weiter vom ersten Abschnitt entfernt im Oberteil oder Messsondenteil angeordnete Komponenten für ein höheres spürbares Ungleichgewicht für den haltenden Benutzer sorgen als wenn die vergleichbaren Komponenten näher am ersten Abschnitt im Oberteil oder Messsondenteil platziert wären.

In diesem Zusammenhang kann somit von Vorteil sein, die gewichtigeren Komponenten des Messhilfsmittels (insbesondere die Energieversorgungsquelle [z.B. Akkus oder Batterien]) - teilweise oder ganz - an einer dem ersten Abschnitt möglichst nahen Stelle im Oberteil oder (wiederum teilweise oder ganz) sogar im bzw. integriert in den ersten Abschnitt unterzubringen (wofür die Energieversorgungsquelle hinsichtlich Ausmasse bzw. Form dem ersten Abschnitt entsprechend dimensioniert ist).

Der Messsondenteil ist dabei vergleichsweise kurz auszulegen, da ansonsten in der erfindungsgemässen Präzisionsgriff-Haltung die Messsonde nicht präzise führ-bzw. positionierbar wäre. So weist der Bereich des Messhilfsinstruments zwischen den Fingerangreifflächen des ersten Abschnitts nach unten bis zur Mündung eine Längsausdehnung in Richtung der Rollachse von maximal zwischen 2 und 4 cm auf.

Ferner sind die Anordnungslokalitäten/-plätze der visuellen Markierungen derart zu wählen, dass diese an einer Seite angeordnet sind, die in der vorgesehenen Haltestellung (insbesondere auch hinsichtlich Rollachse des Messhilfsmittels) vom Körper des Bedieners, der das Messhilfsmittel in natürlicher gebeugter Armhaltung hält, weg zeigt. Zudem ist der Markierungsbereich an dieser Seite derart zu platzieren und zu bemessen, dass bei vorgesehener Haltestellung keine der Markierungen durch die Hand verdeckt wird.

Der erste Abschnitt ist dabei so vorzusehen, dass zumindest für Zeigefinger und Daumen der Hand des Benutzers jeweils eine definierte Greiffläche (bzw. Auflagefläche) vorgesehen ist und der Körper im ersten Abschnitt in seiner Stärke (d.h. in seiner Querdimensionierung, also bzgl. Ausmass eines Querschnitts bzgl. der Rollachse) dergestalt ist, dass dieser Abschnitt bequem im Schreibstiftgriff zwischen Zeigefinger, Daumen und Mittelfinger klemmbar ist. Der erste Abschnitt kann dabei z.B. eine mittlere Quer/Tiefen-Ausdehnung quer zur Rollachse des Messhilfsmittels von maximal 4 cm aufweisen.

Vorteilhaft ist dabei das Oberteil des Messhilfsmittels ferner derart gestaltet und geformt, dass durch das Oberteil an entsprechender Stelle ein weiterer Stützpunkt gebildet wird, an welchem das Messhilfsmittel zur Auflage auf einer Hand-Stelle am Mittelhandbereich, der sich zwischen greifendem Zeigefinger und greifendem Daumen an der Hand befindet, vorgesehen ist.

Die Rollachse des Körpers ist dabei als jene Achse des Körpers definiert, die der Richtung der grössten Ausdehnung entspricht (also z.B. von der Messsonde zu einem oberen Punkt des Markierungsbereichs bzw. einem dort angeordneten zweiten Bedienelement, wie dies unten nochmals näher beschrieben wird). Das Messhilfsmittel kann vorteilhaft dann derart ausgestaltet sein, dass folgende Abschnitte des Messhilfsmittels entlang der Rollachse in der folgenden Reihenfolge aufeinander folgen:
- Messsonde,
- Mündung mit dem sich davon weg erstreckenden ersten Abschnitt,
- ein zweiter Abschnitt, der im Wesentlichen eine Dimensionierung des ersten Abschnitts quer zur Rollachse fortführt, sodass der erste und zweite Abschnitt zusammen einen elongierten, in ein Sackloch mit einer Öffnung von 3cm Durchmesser einführbaren Stift-Abschnitt bilden, und
- der Markierungsbereich, wobei dieser zumindest in einer Querrichtung eine deutlich grössere Ausdehnung quer zur Rollachse aufweist als der erste und zweite Abschnitt.

Der Stift-Abschnitt kann dabei eine Längs-Ausdehnung in Richtung der Rollachse von maximal 15 cm, insbesondere von etwa zwischen 7 und 12 cm, aufweisen.

Der Markierungsbereich kann beispielsweise aufweisen
- eine Längs-Ausdehnung in Richtung der Rollachse von maximal 10 cm, insbesondere von etwa zwischen 5 und 8 cm,
- eine Quer-Ausdehnung in einer ersten Richtung quer zur Rollachse von maximal 10 cm, insbesondere von etwa zwischen 5 und 8 cm, und
- eine Tiefen-Ausdehnung in einer zweiten - zur ersten Richtung senkrechten - Richtung quer zur Rollachse von maximal 7 cm, insbesondere von etwa zwischen 3 bis 6 cm.

Die Messsonde und die Mündung können dabei insbesondere derart ausgeführt sein, dass die Messsonde abnehmbar und ggf. auswechselbar ist. Dafür kann die Mundung beispielsweise als eine Aufnahme für die Messsonde ausgestaltet sein. Dadurch können unterschiedliche Messsonden (beispielsweise taktile Messsonden mit kontaktierender Rubinkugel, die an unterschiedlich langen Stäben angeordnet sind) wechselweise montiert und je nach praktischen Gegebenheiten jeweils ausgewählt und für eine Messaufgabe verwendet werden.

Das erste Bedienelement ist erfindungsgemäss ferner derart am ersten Abschnitt des Messhilfsmittel angeordnet, das dieser in vorgesehener Haltestellung (in der sich das Messhilfsmittel also im Präzisionsgriff befindet) durch den greifenden Zeigefinger oder den Daumen betätigbar ist, insbesondere ohne die jeweils vorgesehene Daumenauflagefläche bzw. Zeigefingerauflagefläche weit verlassen zu müssen. Das erste Bedienelement kann dabei beispielsweise durch eine Drücktaste oder einen sich nach Auslenkung selbsttätig in Ausgangslage zurücksetzender Schiebeschalter gebildet sein.

Die Feinheiten bzgl. Formgebung, Gestaltung und Platzierung von den besagten Abschnitten, Bereichen und Komponenten des erfindungsgemässen Messhilfsmittels liegen dann - je nach gegebenen Anforderungen - im Handeln des Standardfachmanns.

Wie an sich im Stand der Technik bekannt stellen beispielsweise durch eine Kamera erfassbare, passive oder aktive Lichtpunkte die visuellen Markierungen dar. Im Speziellen können die Markierungen durch Reflektoren oder durch LEDs gebildet werden.

Ist das Messhilfsmittel vorgesehen zur Zusammenwirkung mit einem Lasertracker als Messstation so kann ferner am Körper ein Retroreflektor, insbesondere ein Hollow Corner Cube Retroreflektor, in definierter räumlicher Beziehung relativ zu dem Muster bzw. der Messsonde angeordnet sein. Insbesondere kann eine Anordnung in einem Mittelpunkt des durch die Lichtpunkte gebildeten Musters gewählt sein.

Gemäss einem weiteren Aspekt können - wie dies ebenso aus dem Stand der Technik an sich bereits bekannt ist - die Kommunikationsmittel zusätzlich zum Empfang von von der Station versendeten Signalen ausgebildet sein. Beispielsweise können die Kommunikationsmittel dafür eine Empfangsdiode zur Detektion von seitens der Station in Richtung des Messhilfsmittels ausgesendeter Strahlung, auf welche die Signale aufmoduliert sind, aufweisen. Beispielsweise kann dies eine IR-Empfangsdiode sein, die von der Station in Richtung des Messhilfsmittels ausgesendete IR-Strahlung empfängt. Im Speziellen kann für den Fall, dass die Station ein Lasertracker ist und über die auf den Retroreflektor gerichtete Messstrahlung von der Station an das Messhilfsmittel kommuniziert werden soll, die Empfangsdiode nahe neben dem Retroreflektor oder in Messstrahlausbreitungsrichtung hinter dem Retroreflektor, welcher dafür teilweise strahlungsdurchlässig ausgebildet ist, angeordnet sein. Ist der Retroreflektor etwa als Hollow Corner Cube Retroreflektor ausgebildet, so kann dieser in seiner Ecke angeschliffen und somit teilweise strahlungsdurchlässig ausgebildet sein.

Gemäss eines weiteren Aspekts der Erfindung können die visuellen Markierungen rotationssymmetrisch um eine Rotationssymmetrieachse, die durch einen Mittelpunkt des Musters geht, und in zumindest zwei unterschiedlichen Abständen zu einer Ebene, die durch den Mittelpunkt und der Rotationssymmetrieachse als Normale aufgespannt wird, angeordnet sein.

Des weiteren können für eine Ausführungsform, bei der aktive Lichtpunkte die visuellen Markierungen darstellen, die elektronischen Schaltung derart ausgebildet und konfiguriert sein, dass - in Abhängigkeit von einer Betätigung des ersten Bedienelements - die visuellen Markierungen zumindest teilweise automatisch im Rahmen einer Blinksequenz in einer definierten zeitlichen Abfolge und für definierte Zeiträume aktiviert werden, sodass diese blitzartig zu definierten Zeitpunkten - gemessen ab Betätigung des ersten Bedienelements - blinken. Insbesondere können die Lichtpunkte ansonsten (d.h. in Zwischenzeiten zwischen Messungen bzw. damit verbundenen Blinksequenzen) zur Energieeinsparung konstant deaktiviert sein.

Gemäss eines weiteren Aspekts der Erfindung kann die Blinksequenz derart definiert bzw. die elektronische Schaltung dafür derart ausgebildet und konfiguriert sein, dass im Rahmen der Blinksequenz zumindest teilweise unterschiedliche Markierungen der visuellen Markierungen aktiviert werden und dadurch eine Gierwinkel-Absolutreferenz für eine stationsseitige Bestimmung eines Gierwinkels des Messhilfsmittels um die Symmetrieachse ableitbar gemacht ist. In einem speziellen Beispiel dafür kann etwa die elektronische Schaltung derart ausgebildet und konfiguriert sein, dass im Rahmen der Blinksequenz zunächst nur eine definierte (oder zwei definierte [etwa direkt benachbarte], oder auch drei definierte) der visuellen Markierungen aktiviert und anschliessend beim weiteren Blinken jeweils alle der visuellen Markierungen aktiviert werden.

Wiederum für eine Ausführungsform, bei welcher aktive Lichtpunkte die visuellen Markierungen darstellen, können die visuellen Markierungen auch derart in zwei Gruppen aufgeteilt sein, dass diese zwei konzentrische Muster bilden, die jeweils wahlweise aktivierbar und deaktivierbar sind, insbesondere wobei automatisch über eine Steuerschaltung des Messhilfsmittels in Reaktion auf Erhalt eines Signals via Kommunikationsmittel die zwei Gruppen wechselweise jeweils aktiviert bzw. deaktiviert werden.

Dadurch ist eine entfernungsabhängige Einschalt- und Verwendbarkeit entweder der äusseren oder der inneren Gruppe (bzw. des äusseren oder inneren Musters) gegeben, wie dies etwa in der bereits oben erwähnten Patentliteraturdruckschrift WO 2007/124010 A2 beschrieben ist.

Durch die erfindungsgemässe stiftartige Handhaltbarkeit des Messhilfsmittels im Präzisionsgriff können verbessert gezielt Messpunkte auf einer Messobjektoberfläche (wobei hier wiederum Einkerbungen, Löcher, versteckte Punkte, etc., als zur Messobjektoberfläche eines Messobjekts gehörend verstanden werden sollen) kontaktiert werden, ohne dass dafür eine zweite führende Hand das Messhilfsinstrument angreifen müsste. Die Führung des Messhilfsmittels in einem solchen Griff kann dabei intuitiv und ohne zusätzliches spezielles Übung erfolgen (da durch die im Üblichen ohnehin benutzergegebene Fähigkeit, einen Füllfederhalter präzise führen zu können und mit Gefühl ohne zu starken Druck eine Oberfläche kontaktieren zu können, das entsprechende Geschick ohnehin bereits vorhanden ist). Bei den im Stand der Technik bekannten Griffen und Haltestellungen für eigentlich einhändig haltbare Messhilfsmittel, wobei eine Stange im Kraftgriff (also in einem Faustgriff) zu halten ist, ist es hingegen oftmals zur präzisen Führung der Messsonde erforderlich, die eigentlich nicht-haltende zweite Hand - die Rubinkugel oder den die Rubinkugel haltenden Messsondenstift angreifend - zur präzisen Führung und Kontaktierung eines gewünschten Punktes an der Messobjektoberfläche zur Hilfe zu nehmen, um rasch und genau den gewollten Punkt zu treffen (und ohne dabei Gefahr zu laufen, die Messobjektoberfläche durch unpräzises und eventuell ruppiges Anrempeln oder gar unbeabsichtigtes Kratzen die Oberfläche [etwa eine Lackschicht] und damit das zu vermessende Objekt mit der Rubinkugel zu beschädigen).

Erfindungsgemäss kann nun also auf die Zuhilfenahme einer zweiten Hand in der Regel verzichtet werden (was sowohl für das feine Positionieren des Messhilfsmittels als auch für das Messungsauslösen zutrifft), sodass die zweite Hand frei bleibt und während der Messaufgabe sogar parallel für andere Zwecke verwendet werden kann (wie etwa zum Stützen des Körpers bei Hineinlehnen in ein Cockpit eines Autos, falls etwa Oberflächenpunkte eines Armaturenbretts zu vermessen sind und der Benutzer für die Vermessungsaufgabe jedoch nicht im Auto Platz nehmen darf/kann).

Ferner betrifft die Erfindung ein System zur Vermessung von einer Objektoberfläche aus einem Messhilfsmittel - wie oben beschrieben - und einer Station zur Positions- und Orientierungsbestimmung des Messhilfsmittels.

Das Messhilfsmittel kann dabei im Speziellen einen Retroreflektor, insbesondere einen Hollow Corner Cube Retroreflektor, am Körper in definierter räumlicher Beziehung relativ zu dem Muster bzw. der Messsonde aufweisen und die Station kann im Speziellen als Lasertracker zur Ausrichtung eines Laserstrahls auf den Retroreflektor ausgebildet sein. Dabei kann der Lasertracker ferner eine Kamera aufweisen zur Aufnahme eines Bildes von dem Muster. Des Weiteren kann der Lasertracker Funktionalitäten aufweisen zur dreidimensionalen Bestimmung der Position des Retroreflektors via Laserstrahl und zur dreidimensionalen Bestimmung der Orientierung des Messhilfsmittels via Auswertung des aufgenommenen Bildes von dem Muster.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1-8: verschiedene Ausführungsbeispiele und Varianten für ein erfindungsgemässes Messhilfsmittel;
- Fig. 9-10: eine erläuternde Visualisierung für eine beispielhafte Blinksequenz zur Bestimmung einer absoluten Referenz für das Bestimmen des Gierwinkels des Messhilfsmittels; und
- Fig. 11-14: verschiedene Ausführungsbeispiele und Varianten für eine - ein Teil des erfindungsgemässen Messsystems bildende - Station zur Vermessung des Messhilfsmittels in sechs Freiheitsgraden.

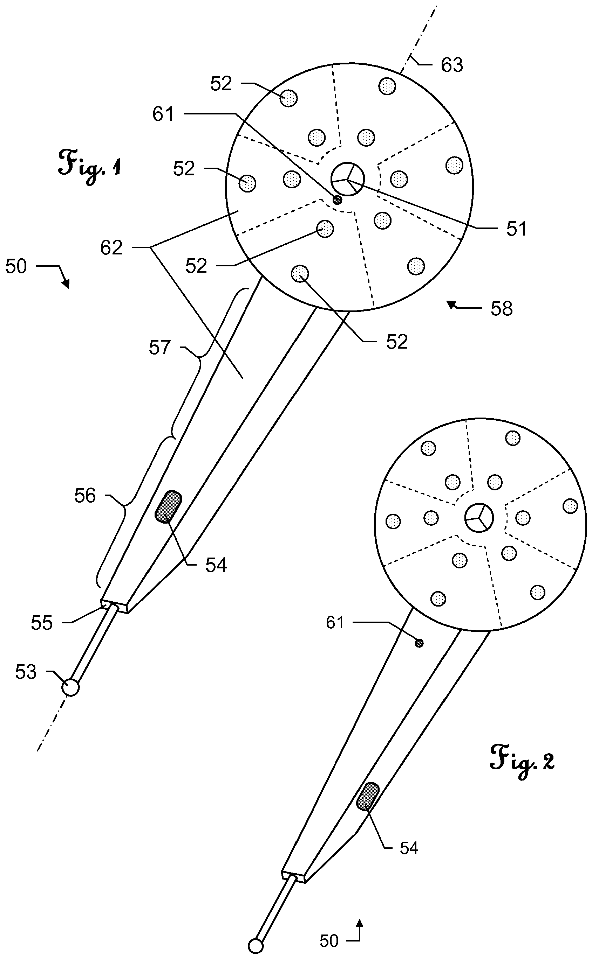

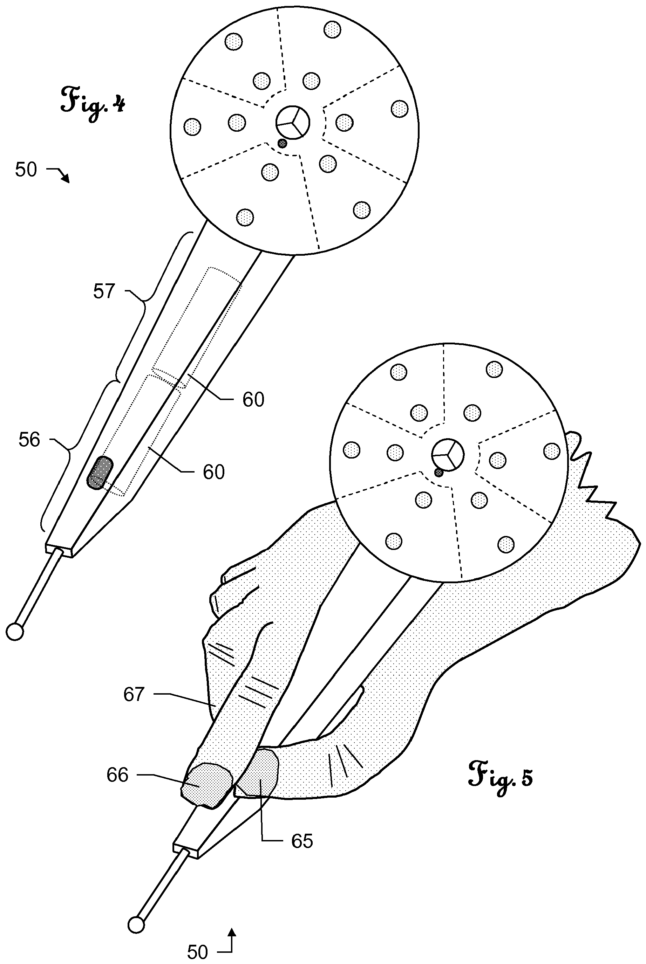

Figuren 1 und 5 zeigen ein erfindungsgemässes handhaltbares Messhilfsmittel 50 zur Verwendung in einem - eine Station zur Positions- und Orientierungsbestimmung des Messhilfsmittels aufweisenden - System zur Vermessung von einer Objektoberfläche. Das Messhilfsmittel 50 weist dabei einen Körper 62 auf, an dem in einem Markierungsbereich 58 in definierter räumlicher Beziehung zueinander visuelle Markierungen 52 angeordnet sind, sodass diese ein Muster bilden.

An einer Mündung 55 des Körpers 62 ist ferner in definierter räumlicher Beziehung relativ zu dem Muster eine Messsonde 53 angeordnet, die hier beispielhaft durch einem Stift mit einer daran angeordneten, taktil zu verwendenden Kugel zum physischen Kontaktieren eines Messpunktes auf der Objektoberfläche gebildet wird.

Ferner ist am Körper ein durch einen Benutzer betätigbares erstes Bedienelement 54 (etwa eine drückbare Bedientaste) vorhanden. Bei Betätigung wird durch eine elektronische Schaltung ein Signal erzeugt, das indikativ ist für eine Auslösung von einer durch die vermessende Station durchführbaren Positions- und Orientierungsbestimmung des Messhilfsmittels. Zudem sind kabellose Kommunikationsmittel zur Versendung des Signals an die Station vorgesehen. Diese können - im Falle von aktiven Lichtpunkten (also etwa LEDs - Licht emittierende Dioden) als Markierungen - beispielsweise in einer Zweitfunktion der LEDs durch diese gebildet werden (kodiertes Blinkmuster, das seitens der Station empfangen und dekodiert wird). Alternativ kann speziell für diesen Zweck eine separate IR-Sendediode vorgesehen sein (hier nicht gezeigt), sodass die damit versendeten Signale stationsseitig mit einem IR-Empfänger erhalten werden können (z.B. dem Prinzip nach analog zur IR-Fernbedientechnik für Fernsehgeräte).

Erfindungsgemäss ist nun das Messhilfsmittel - wie dies etwa in der Figur 5 ersichtlich ist (in welcher das Messhilfsmittel 50 aus Figur 1 in Messstellung gegriffen im Präzisionsgriff mit der Hand eines Benutzers dargestellt ist) - hinsichtlich Gesamtdimensionierung und Gewichtsverteilung derart ausgestaltet, sind die Anordnungslokalitäten der visuellen Markierungen 52 am Körper 62 derart gewählt, ist ein sich von der Mündung 55 weg erstreckender erster Abschnitt 56 des Körpers 62 derart beschaffen, geformt und dimensioniert sowie ist das erste Bedienelement 54 derart an dem ersten Abschnitt 56 des Körpers 62 angeordnet, dass das Messhilfsmittel 50 in Messstellung vorgesehen ist zum einhändigen schreibstiftartigen Gehaltenwerden und dabei der erste Abschnitt 56 als Greifbereich für zumindest Daumen 65 und Zeigefinger 66, sowie insbesondere auch Mittelfinger 67, des Benutzers dient, sowie dass in dieser Messstellung das erste Bedienelement 54 mit dem greifenden Zeigefinger 66 betätigbar ist.

Das Messhilfsmittel 50 aus Figur 1 ist beispielhaft derart ausgestaltet, dass folgende Abschnitte des Messhilfsmittels 50 entlang der Rollachse 63 in der folgenden Reihenfolge aufeinander folgen:
- Messsonde 53,
- Mündung 55 mit dem sich davon weg erstreckenden ersten Abschnitt 56,
- ein zweiter Abschnitt 57, der im Wesentlichen eine Dimensionierung des ersten Abschnitts 56 quer zur Rollachse 63 fortführt, sodass der erste und zweite Abschnitt 56,57 zusammen einen elongierten, in ein Sackloch mit einer Öffnung von 3cm Durchmesser einführbaren Stift-Abschnitt bilden, und
- der Markierungsbereich 58, wobei dieser zumindest in einer Querrichtung eine deutlich grössere Ausdehnung quer zur Rollachse 63 aufweist als der erste und zweite Abschnitt 56,57.

In dem in Figur 1 gezeigten Beispiel ist das Messhilfsmittel 50 zudem vorsorglich gerüstet, um zusammen mit einem Lasertracker als Messstation verwendet zu werden. Dafür ist ferner am Körper 62 ein Retroreflektor 51, insbesondere ein Hollow Corner Cube Retroreflektor, in definierter räumlicher Beziehung relativ zu dem Muster bzw. der Messsonde 53 angeordnet. Insbesondere kann - wie hier gezeigt - die Anordnung des Retroreflektors 51 in einem Mittelpunkt des durch die Lichtpunkte 52 gebildeten Musters gegeben sein.

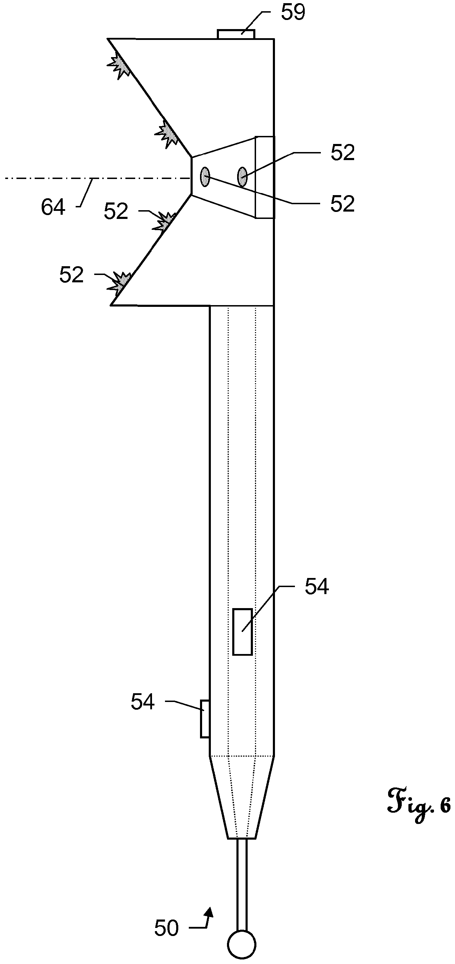

Des Weiteren sind in dem in Figur 1 gezeigten Beispiel als die visuellen Markierungen 52 auf zwei konzentrischen Kreisbahnen jeweils sechs Lichtpunkte rotationssymmetrisch um eine Rotationssymmetrieachse angeordnet, die durch einen Mittelpunkt des Musters geht (und auch die Gierwinkelachse des Messhilfsinstruments bildet). Ferner sind die Lichtpunkte auf jeder Kreisbahn jeweils (wie dies in der in Figur 6 gezeigten Seitenansicht ersichtlich ist) in zumindest zwei unterschiedlichen Abständen zu einer Ebene, die durch den Mittelpunkt und der Rotationssymmetrieachse als Normale aufgespannt wird, angeordnet.

Die visuellen Markierungen 52 sind derart in zwei Gruppen (wobei die jeweils sechs auf einer gemeinsamen Kreisbahn angeordnete Lichtpunkte jeweils eine Gruppe bilden)aufgeteilt, dass diese zwei konzentrische Muster bilden. Die Gruppen sind dabei wahlweise aktivierbar und deaktivierbar, insbesondere wobei automatisch über eine Steuerschaltung des Messhilfsmittels in Reaktion auf Erhalt eines Signals via Kommunikationsmittel die zwei Gruppen wechselweise jeweils aktiviert bzw. deaktiviert werden. Die Kommunikationsmittel zum Erhalt eines von der Station ausgesendeten Signals können dabei eine IR-Empfangsdiode 61 aufweisen, die hier nahe dem Retroreflektor 61 im Markierungsbereich 58 angeordnet ist. Eine derartige Anordnung der IR-Empfangsdiode 61 kann insbesondere dann von Vorteil (oder sogar erforderlich) sein, wenn über den von einem Lasertracker als Messstation gezielt auf den Retroreflektor gerichteten Messstrahl kommuniziert werden soll.

In Figur 2 ist ein sehr ähnliches Messhilfsinstrument 50 wie in Figur 1 dargestellt. Anders als in Figur 1 ist das erste Bedienelement 54 hier nun jedoch derart an dem ersten Abschnitt des Körpers angeordnet, dass in schreibstiftartiger Messhaltung das erste Bedienelement 54 mit dem greifenden Daumen betätigbar ist.

Ferner ist in Figur 2 die als Empfänger für die Kommunikationsmittel dienende Empfangsdiode 61 als Alternative zu der in Figur 1 gezeigten Variante nun am Stift-Abschnitt angeordnet. Eine derartige Platzierung der Empfangsdiode 61 kann beispielsweise gewählt werden, wenn die Station als Kommunikationsmittel-Sender eine in einen weiten Raumwinkelbereich sendende Lichtquelle (wie z.B. eine IR-LED) verwendet.

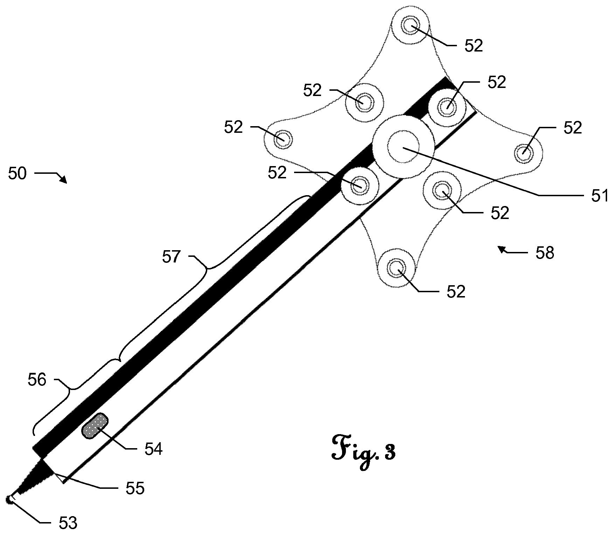

In Figur 3 ist ein geringfügig anders ausgebildetes erfindungsgemässes Messhilfsinstrument 50 wie in Figur 1 dargestellt, insbesondere was den Markierungsbereich 58 betrifft. So bilden bei der in Figur 3 gezeigten Ausführungsform nun jeweils vier Lichtpunkte, die jeweils (betrachtet ohne Tiefenwirkung, also projiziert auf eine Ebene betrachtet) auf zwei konzentrischen Kreisbahnen mit unterschiedlichen Durchmessern angeordnet sind, jeweils ein Muster.

Figur 4 zeigt nochmals das Ausführungsbeispiel aus Figur 1, wobei hier nun eine mögliche vorteilhafte Platzierung der Batterien/Akkus veranschaulicht ist. Das Package (also die geometrische und funktionale Anordnung von Bauteilen und Komponenten des Messhilfsinstruments) ist dabei so gewählt, dass die gewichtigeren Bauteile des Messhilfsmittels (insbesondere hier also die Energieversorgungsquelle) teilweise an einer dem ersten Abschnitt möglichst nahen Stelle im zweiten Abschnitt 57 und teilweise im bzw. integriert in den ersten Abschnitt 56 untergebracht sind.

Dadurch kann eine Gewichtsverteilung geschaffen werden, bei welcher auch eine schräge (oder auch waagerechte) Stellung des mit drei Fingern schreibstiftartig gehaltenen Messhilfsmittels bequem einnehmbar und für einen Benutzer gut haltbar ist und dabei kein zu starkes Drehmoment durch Übergewicht des sich vom ersten Abschnitt weg nach oben erstreckenden Oberteils auf die haltende Hand wirkt.

In Figur 6 ist eine Seitenansicht von einem Messhilfsmittel 50, das sehr ähnlich ist zu den in Figuren 1 und 2 gezeigten Beispielen, dargestellt. Das Messhilfsmittel 50 weist hier zwei erste Bedienelemente 54 und ein zweites Bedienelement 59 (insbesondere zur Betätigung mit der zweiten, nicht-haltenden Hand) auf. Die beiden ersten Bedienelemente 54 sind dabei am ersten Abschnitt angeordnet, sodass eines davon - wie jenes in Figur 1 - mit dem Zeigefinger und das andere davon - wie jenes in Figur 2 - mit dem Daumen betätigbar ist. Des Weiteren ist hier ersichtlich (wie oben in Verbindung mit dem Beschrieb von Figur 1 bereits erwähnt), dass die visuellen Markierungen 52 (Lichtpunkte) pro Gruppe in zumindest zwei unterschiedlichen Abständen zu einer Ebene, die durch den Mittelpunkt des Musters und der Rotationssymmetrieachse (bzw. Gierwinkelachse 64) als Normale aufgespannt wird, angeordnet sind.

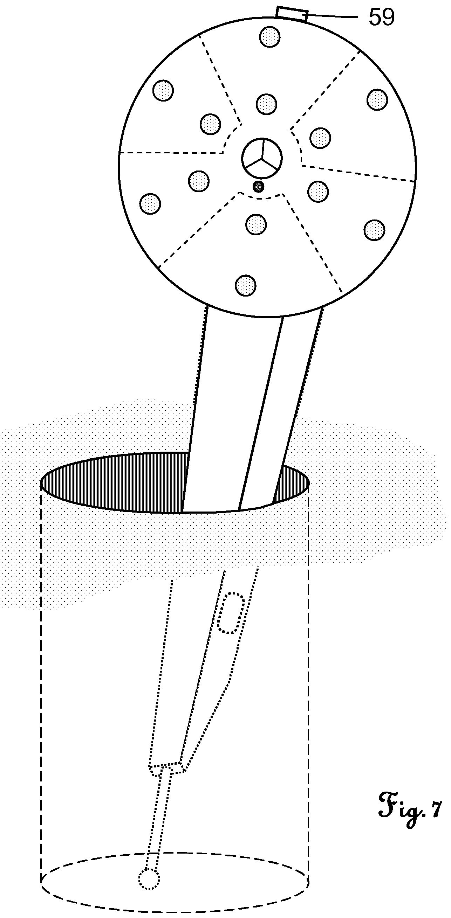

Figur 7 zeigt das Ausführungsbeispiel aus Figur 2, das hier jedoch nun - analog zum Ausführungsbeispiel aus Figur 6 - zusätzlich ein am Körper im Markierungsbereich lokalisiertes zweites Bedienelement 59 (insbesondere zur Betätigung mit der zweiten, nicht-haltenden Hand) aufweist.

Dies ermöglicht die Verwendung des Messhilfsmittels auch in einer zweiten Messhaltung bzw. Messstellung, bei der das Messhilfsmittel 50 mit einer Hand von hinten am Markierbereich gehalten wird und mit der zweiten Hand das zweite Bedienelement 59 betätigbar ist, sodass das Messhilfsmittel 50 auch in ein Sackloch einführbar ist und somit auch Bodenpunkte im Sackloch als Messobjektoberflächenpunkte vermessbar sind.

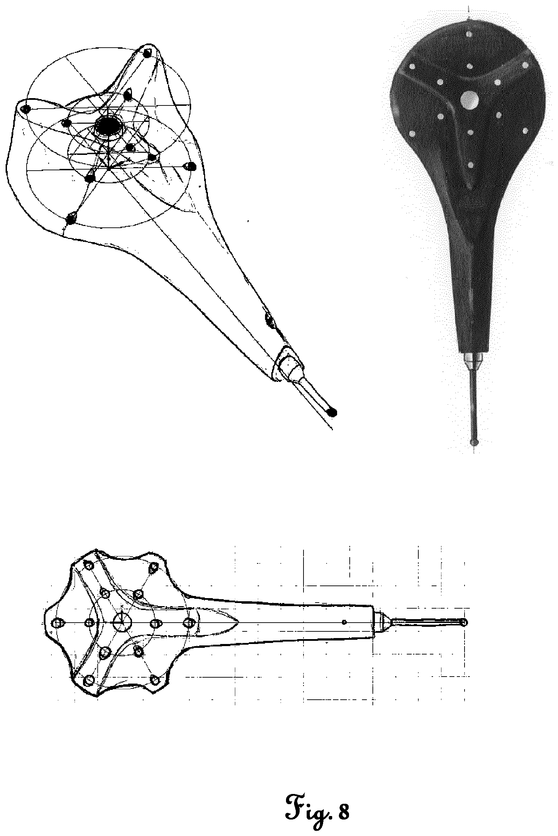

In Figur 8 sind drei weitere mögliche Ausführungsformen für ein erfindungsgemässes Messhilfsmittel dargestellt, die prinzipiell und funktionell den zuvor gezeigten Ausführungsbeispielen sehr ähneln.

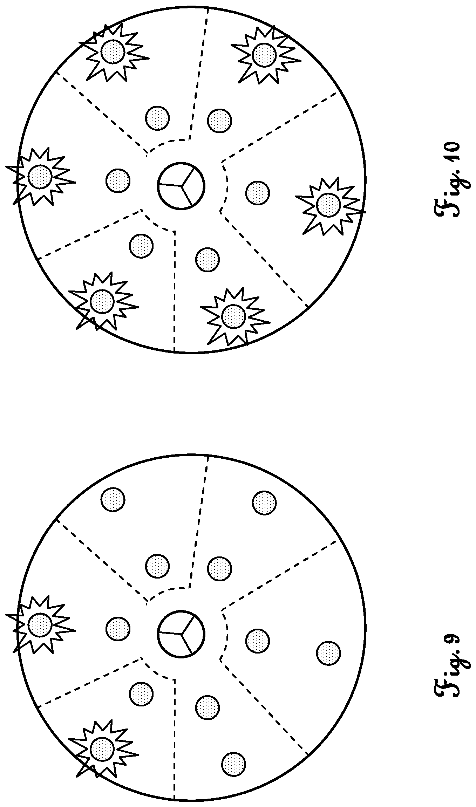

Figuren 9 und 10 zeigen zusammengenommen eine erläuternde Visualisierung für eine beispielhafte Blinksequenz zur Bestimmung einer absoluten Referenz für das Bestimmen des Gierwinkels des Messhilfsmittels. Dafür ist in den beiden Figuren jeweils zu unterschiedlichen Blinkzeitpunkten innerhalb einer Blinksequenz der Markierungsbereich des Messhilfsmittels aus z.B. Figur 1 zu sehen.

Da die visuellen Markierungen rotationssymmetrisch um eine Rotationssymmetrieachse, die durch einen Mittelpunkt des Musters geht, angeordnet sind, kann - für den Fall dass stets alle Markierungen einer Gruppe blinken - anhand von stationsseitiger Bildaufnahme und -auswertung der Gierwinkel nicht absolut eindeutig bestimmt werden. Die elektronische Schaltung kann daher nun derart ausgebildet und konfiguriert sein, dass im Rahmen der Blinksequenz zumindest teilweise unterschiedliche Markierungen der visuellen Markierungen (einer Gruppe) aktiviert werden und dadurch - anhand von stationsseitiger Kenntnis darüber, welche der Lichtpunkte bei welchem Blitzen nun jeweils leuchten - eine Gierwinkel-Absolutreferenz für eine stationsseitige Bestimmung eines Gierwinkels des Messhilfsmittels um die Symmetrieachse ableitbar gemacht wird.

Beispielsweise kann die elektronische Schaltung derart ausgebildet und konfiguriert sein, dass im Rahmen der Blinksequenz zunächst nur eine oder zwei direkt benachbarte einer Gruppe (dies ist in Figur 9 dargestellt) der visuellen Markierungen aktiviert und anschliessend jeweils alle der visuellen Markierungen einer Gruppe aktiviert werden (wie in Figur 10 dargestellt).

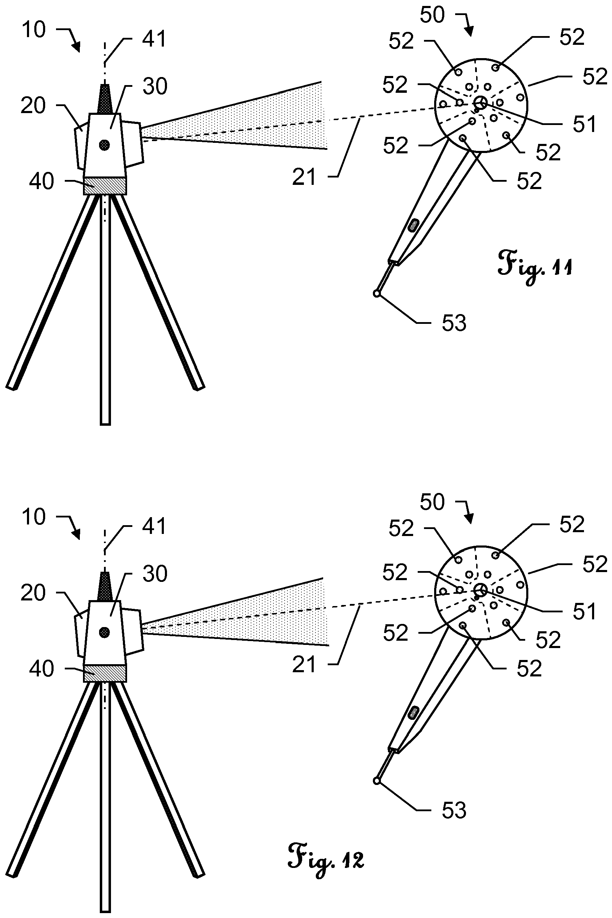

Figuren 11 bis 14 zeigen verschiedene Ausführungsbeispiele und Varianten für eine - einen Teil des erfindungsgemässen Messsystems bildende - Station zur Vermessung des Messhilfsmittels in sechs Freiheitsgraden (6-DoF).

In den Figuren 11 bis 13 sind dabei als jeweilige Stationen jeweils unterschiedliche Varianten von Lasertrackern in Verwendung mit jeweils einem Messhilfsobjekt 50, dessen Position und Orientierung mit 6-DoF (d.h. mit sechs Freiheitsgraden, drei translatorische und drei rotatorische) bestimmt werden soll, dargestellt.

Der erste Lasertracker 10 (Figur 11) weist eine Basis 40 und eine Stütze 30 auf, wobei die Stütze 30 um eine durch die Basis 40 definierte Schwenkachse 41 relativ zur Basis 40 schwenkbar bzw. rotierbar angeordnet ist. Zudem ist eine Anzieleinheit 20 (Schwenkeinheit) derart an der Stütze 30 angeordnet, dass die Anzieleinheit 20 relativ zur Stütze 30 um eine Kippsachse (Neigungs- bzw. Transitachse) drehbar ist. Durch eine so um zwei Achsen bereitgestellte Ausrichtungsmöglichkeit der Anzieleinheit 20 kann ein von dieser Einheit 20 emittierter Laserstrahl 21 exakt ausgerichtet und damit Retroreflektoren angezielt werden.

Dieses Ausrichten kann mittels einer Motorisierung automatisch erfolgen. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Messlaserstrahl 21 auf den Retroreflektor 51 des Messhilfsobjekts 50 gerichtet und wird an diesem zurück zum Lasertracker 10 retroreflektiert. Mittels dieses Messlaserstrahls 21 kann eine Entfernung zum Objekt 50 bzw. zum Reflektor 51, insbesondere mittels Laufzeitmessung, mittels des Phasenmessprinzips oder mittels des Fizeau-Prinzips, bestimmt werden. Der Lasertracker 10 verfügt hierzu über eine Entfernungsmesseinheit (z.B. mit Interferometer und Absolutdistanzmesser) und über Winkelmesser, die eine Stellung der Anzieleinheit 20, mittels derer der Laserstrahl 21 definiert ausgerichtet und geführt werden kann, und somit eine Ausbreitungsrichtung des Laserstrahls 21 bestimmbar machen.

Ausserdem weist der Lasertracker 10, insbesondere die Schwenkeinheit 20, eine Bilderfassungseinheit auf. Diese Bilderfassungseinheit kann zum Zweck einer Positionsbestimmung einer Sensorbelichtung auf einem Sensor bzw. in einem erfassten Bild einen CMOS aufweisen oder ist insbesondere als CCD- oder Pixelsensorarray-Kamera ausgebildet. Derartige Sensoren erlauben eine positionssensitive Detektion von erfasster Belichtung auf dem Detektor. Wie zuvor in Verbindung mit Figur 1 beschrieben weist das Messhilfsobjekt 50 einen taktilen Sensor 53 auf, dessen Rubinkugel mit einer zu vermessenden Zielobjektoberfläche in Kontakt gebracht werden kann. Während dieser Kontakt zwischen dem Tastwerkzeug 50 und der Messobjektoberfläche besteht können eine Position des Kontaktpunktes 53 im Raum und damit die Koordinaten des angetasteten Punkts an der Messobjektoberfläche exakt bestimmt werden. Dieses Bestimmen erfolgt vermittels einer definierten relativen Positionierung des Kontaktpunkts 53 zum Reflektor 51 und zu am Messhilfsobjekt 50 angeordneten Referenzmerkmalen 52, die beispielsweise als Leuchtdioden 52 (LEDs) ausgebildet sein können. Alternativ können die Referenzmerkmale 52 auch derart ausgebildet sein, dass diese bei einem Beleuchten, z.B. mit Strahlung einer definierten Wellenlänge, die auftreffende Strahlung reflektieren (z.B. reflektiv ausgebildete Markierungen 52), insbesondere eine bestimmte Leuchtcharakteristik zeigen, oder dass diese ein definiertes Muster oder Farbkodierung aufweisen. Aus der Lage bzw. Verteilung der durch die Referenzmerkmale 52 erzeugten Lichtpunkte in einem mit einem Sensor der Bilderfassungseinheit erfassten Bild kann somit eine Orientierung des Tastwerkzeugs 50 bestimmt werden.

Als Grundlage für die Bestimmung der Orientierung dient damit das erfasste Bild des Messhilfsobjekts 50 bzw. der bereitgestellten Lichtpunkte des Objekts 50. Für eine insbesondere fokussierte Erfassung der LEDs 52 mit einem optimalen und bekannten Bildmassstab kann der Lasertracker 10 über eine Vario-Zoom-Optik verfügen, d.h. über zwei unabhängig voneinander, relativ zum Bilderfassungssensor positionierbare optische Baugruppen (z.B. Linsen).

Für diese letztendliche Orientierungsbestimmung verfügt der Lasertracker 10 ferner über eine spezielle Bildaufnahme- und -auswertungsfunktionalität, die durch eine Steuerungs- und Verarbeitungseinheit des Trackers 10 ausführbar ist. Im Rahmen dieser Ausführung wird ein Bild der Referenzmerkmale 52 des Messhilfsinstrument 50 erfasst und basierend auf Bildpositionen für die im Bild erfassten Lichtpunkte mittels Bildverarbeitung die Orientierung bzw. Ausrichtung des Messhilfsobjekts 50 abgeleitet. Hierbei ist die Kamera derart ausgerichtet, dass ein Bild in Richtung des mittels des Laserstrahls 21 angezielten Messhilfsmittels 50 erfassbar ist.

Der zweite Lasertracker 10 - siehe Figur 12 - kann dabei im Wesentlichen ähnlich zu jenem aus Figur 11 ausgebildet sein. Ein Unterschied ist, dass die in die Anzieleinheit 20 integrierte Kamera zur Aufnahme des Bildes vom durch die Markierungen 52 gebildeten Muster koaxial zur Laser- und Messachse angeordnet und ausgerichtet ist. Ein Beispiel für eine solche Ausführungsform eines Lasertrackers ist etwa in der Europäischen Patentanmeldung mit der Nummer EP 13167256.0 beschrieben.

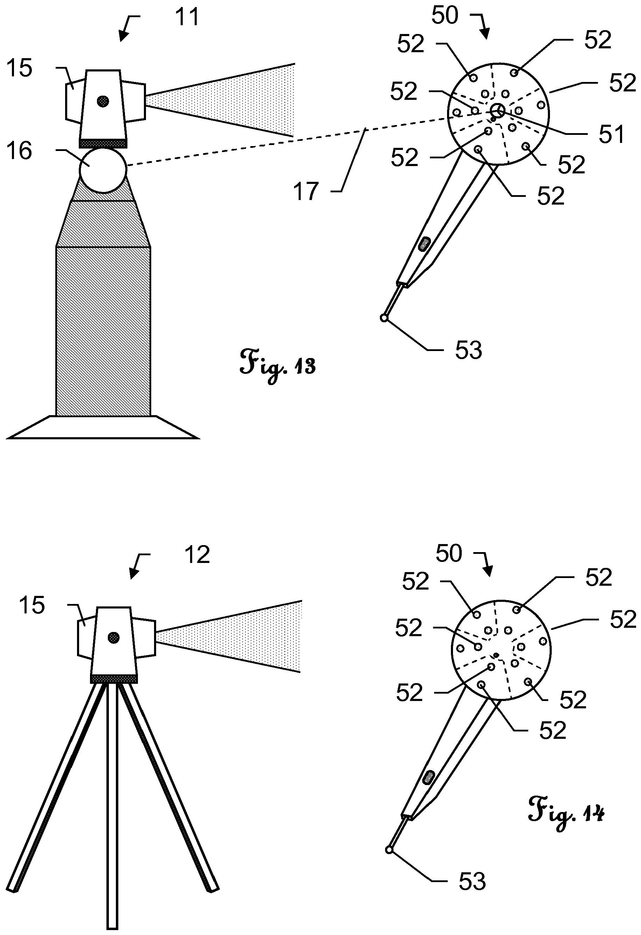

Der dritte Lasertracker 11 (siehe Figur 13) weist eine von einer schwenkbaren Kameraeinheit 15 (mit z.B. einem Vario-Zoom-Objektiv) separierte Strahlführungseinheit 16 zur Emission eines zweiten Laserstrahls 17 auf, welcher ebenfalls auf den Reflektor 51 ausgerichtet ist. Sowohl der Laserstrahl 17 als auch die Kameraeinheit 15 sind jeweils um zwei Achsen motorisiert schwenkbar und können dadurch derart ausgerichtet werden, dass mittels der Kamera 15 ein Bereich um den mit dem Laserstrahl 17 angezielten Retroreflektor 51 (und somit die LEDs 52 des Messhilfsobjekts 50) erfasst werden kann. Somit können auch hier eine präzise Entfernung zum Reflektor 51 und eine Orientierung des Objekts 50 anhand einer Bildauswertung der Positionen der Lichtpunkte im aufgenommenen Bild (unter Heranziehung der bekannten räumlichen Beziehung der LEDs 52 untereinander) bestimmt werden.

Zur jeweiligen Ausrichtung der Laserstrahlen 17,21 auf den Reflektor 51 sind an den Lasertrackern 10, 11 jeweils Beleuchtungsmittel zur Beleuchtung des Reflektors 51 mit Strahlung einer bestimmten Wellenlänge, insbesondere im infraroten Wellenlängenbereich, vorgesehen und zusätzliche zumindest eine Zielsuchkamera mit einem positionssensitiven Detektor, eine so genannte ATR-Kamera (automatic target recognition), an jedem Tracker 10, 11 angeordnet.

Die Entfernungsmesseinheit des jeweiligen Lasertrackers 10, 11 stellt eine Entfernungsinformation zum Retroreflektor 51 auf Basis einer Bestimmung einer relativen oder absoluten Distanz zwischen dem jeweiligen Tracker 10, 11 und dem Retroreflektor 51 und einer Bestimmung einer Änderung dieser Distanz bereit. Wird dabei die absolute Distanz insbesondere mittels Laufzeitmessung, mittels des Phasenmessprinzips oder mittels des Fizeau-Prinzips bestimmt, so wird zur Bestimmung der Distanzänderung eine Messung mit einem der jeweiligen Entfernungsmesseinheit zugeordneten Interferometer durchgeführt. Die Messstrahlung 17,21 wird derart aus dem Tracker 10, 11 ausgesendet, dass diese auf den Retroreflektor 51 trifft und an diesem rückreflektiert wird. Der reflektierte Strahl bzw. Teile des reflektierten Strahls werden dann wiederum seitens des Trackers 10, 11 erfasst und entlang eines Messpfades zum Interferometerdetektor geführt, wo die Referenzstrahlung mit der empfangenen Messstrahlung 17,21 überlagert wird. Durch diese Überlagerung entsteht ein Interferenzmuster aus den beiden Strahlungen, welche am Detektor erfasst und aufgelöst werden kann. Eine Entfernungsänderung kann z.B. durch fortlaufende Detektion von einem Wechsel zwischen Maxima (konstruktive Interferenz) und Minima (destruktive Interferenz) bestimmt werden. Dabei werden insbesondere fortlaufend die detektierten Intensitätsmaxima und/oder Intensitätsminima gezählt.

Die in Figur 14 gezeigte Station 12 zur Vermessung des Messhilfsmittels 50 in sechs Freiheitsgraden beruht dabei rein auf die Kamerabildaufnahme und -auswertung des aufgenommenen Musters (das durch die visuellen Markierungen 52 gebildet wird) im Bild, wie dies beispielsweise in den Patentliteraturdruckschriften WO 2007/124009 A2 oder WO 2007/124010 A2 beschrieben ist. Das Messhilfsmittel 50 muss dann nicht notwendigerweise zusätzlich zu den Markierungen 52 auch einen Retroreflektor aufweisen (wie dies bei der Ausführungsform des in Figur 14 gezeigten und auch dementsprechend retroreflektorlos ausgebildeten Messhilfsinstruments 50 der Fall ist). Beispielsweise kann die Station 12 eine motorisiert schwenk- und kippbare Kameraeinheit 15 aufweisen, oder aber kann das Sichtfeld einer Kamera auch über einen in zwei Achsen motorisiert schwenk- bzw. kippbaren Spiegel veränderbar ausrichtbar sein.

Es versteht sich, dass diese dargestellten Figuren nur mögliche Ausführungsbeispiele schematisch darstellen. Die verschiedenen Ansätze können ebenso miteinander sowie mit Vorrichtungen oder Verfahren des Stands der Technik kombiniert werden.

## Patentansprüche

1. Handhaltbares Messhilfsmittel (50) zur Verwendung in einem - einen Lasertracker (10, 11) als Station zur Positions- und Orientierungsbestimmung des Messhilfsmittels aufweisenden - System zur Vermessung von einer Objektoberfläche, mit
• einem Körper (62), wobei durch den Körper (62) eine Rollachse (63) definiert ist als jene Achse des Körpers (62), die der Richtung der grössten Ausdehnung entspricht,
• visuellen Markierungen (52), die in definierter räumlicher Beziehung ein Muster bildend an dem Körper (62) in einem Markierungsbereich (58) angeordnet sind,
• eine an einer Mündung (55) des Körpers (62) in definierter räumlicher Beziehung relativ zu dem Muster angeordnete Messsonde (53) für die Objektoberfläche, insbesondere mit einer taktil zu verwendenden Kugel zum physischen Kontaktieren eines Messpunktes auf der Objektoberfläche,
• einem Retroreflektor (51), der am Körper (62) in definierter räumlicher Beziehung relativ zu dem Muster bzw. der Messsonde angeordnet ist und durch den Lasertracker (10,11) automatisch hochpräzise anzielbar, verfolgbar und positionell in drei Dimensionen vermessbar ist,
• ein durch einen Benutzer betätigbares erstes Bedienelement (54),
• eine elektronische Schaltung zur - in Abhängigkeit von einer Betätigung des ersten Bedienelements erfolgenden - Erzeugung eines Signals, das indikativ ist für eine Auslösung von einer durch die Station durchführbaren Positions- und Orientierungsbestimmung des Messhilfsmittels (50), und
• kabellose Kommunikationsmittel zur Versendung des Signals an die Station,
**dadurch gekennzeichnet, dass**
• das Messhilfsmittel (50) hinsichtlich Gesamtdimensionierung und Gewichtsverteilung derart ausgestaltet ist und Anordnungslokalitäten der visuellen Markierungen (52) am Körper (62) derart gewählt sind,
• ein sich von der Mündung (55) weg erstreckender erster Abschnitt (56) des Körpers (62) derart beschaffen, geformt und dimensioniert ist sowie
• das erste Bedienelement (54) derart an dem ersten Abschnitt (56) des Körpers (62) angeordnet ist,
dass das Messhilfsmittel (50) in Messstellung vorgesehen ist zum einhändigen schreibstiftartigen Gehaltenwerden und dabei der erste Abschnitt (56) als Greifbereich für zumindest Daumen (65) und Zeigefinger (66), sowie insbesondere auch Mittelfinger (67), des Benutzers dient, sowie dass in dieser Messstellung das erste Bedienelement (54) mit dem greifenden Daumen (65) oder dem greifenden Zeigefinger (66) betätigbar ist,
wobei zumindest für Zeigefinger (66) und Daumen (65) des Benutzers jeweils eine definierte Greiffläche vorgesehen ist und der Körper (62) im ersten Abschnitt (56) in seiner Querdimensionierung bzgl. der Rollachse (63) dergestalt ist, dass dieser erste Abschnitt (56) in Schreibstiftgriff zwischen Zeigefinger (66), Daumen (65) und Mittelfinger (67) klemmbar ist,
wobei folgende Abschnitte des Messhilfsmittels (50) entlang der Rollachse (63) in der folgenden Reihenfolge aufeinander folgen;
• Messsonde (53),
• Mündung (55) mit dem sich davon weg erstreckenden ersten Abschnitt (56), wobei eine Längsausdehnung in Richtung der Rollachse (63) zwischen den Greifflächen nach unten bis zur Mündung von maximal zwischen 2 und 4 cm vorliegt,
• ein zweiter Abschnitt (57), der im Wesentlichen eine Dimensionierung des ersten Abschnitts (56) quer zur Rollachse (63) fortführt, sodass der erste und zweite Abschnitt (56,57) zusammen einen elongierten, in ein Sackloch mit einer Öffnung von 3cm Durchmesser einführbaren Stift-Abschnitt bilden, und
• der Markierungsbereich (58), wobei dieser zumindest in einer Querrichtung eine deutlich grössere Ausdehnung quer zur Rollachse (63) aufweist als der erste und zweite Abschnitt (56,57),

2. Messhilfsmittel (50) nach Anspruch 1,
**dadurch gekennzeichnet, dass**
durch eine Kamera erfassbare, passive oder aktive Lichtpunkte die visuellen Markierungen (52) darstellen, insbesondere wobei die Markierungen durch Reflektoren oder durch LEDs gebildet werden.

3. Messhilfsmittel (50) nach Anspruch 1 oder 2,
**dadurch gekennzeichnet, dass**
der Retroreflektor (51) als ein Hollow Corner Cube Retroreflektor ausgestaltet ist und/oder in einem Mittelpunkt des Musters angeordnet ist.

4. Messhilfsmittel (50) nach einem der vorangehenden Ansprüche,
**dadurch gekennzeichnet, dass**
die Kommunikationsmittel zusätzlich zum Empfang von von der Station versendeten Signalen ausgebildet sind, insbesondere wobei die Kommunikationsmittel dafür eine Empfangsdiode (61) zur Detektion von seitens der Station in Richtung des Messhilfsmittel (50) ausgesendeter Messstrahlung (17,21), auf welche die Signale aufmoduliert sind, aufweisen, im Speziellen wobei die Empfangsdiode (61) (nahe neben dem Retroreflektor (51)) oder in Messstrahlausbreitungsrichtung hinter dem Retroreflektor, welcher dafür teilweise strahlungsdurchlässig ausgebildet ist, angeordnet ist.

5. Messhilfsmittel (50) nach einem der vorangehenden Ansprüche,
**dadurch gekennzeichnet, dass**
der Stift-Abschnitt eine Längs-Ausdehnung in Richtung der Rollachse (63) von maximal 15 cm, insbesondere von etwa zwischen 7 und 12 cm, aufweist,

6. Messhilfsmittel (50) nach einem der vorangehenden Ansprüche,
**dadurch gekennzeichnet, dass**
der Markierungsbereich (58) aufweist
• eine Längs-Ausdehnung in Richtung der Rollachse (63) von maximal 10 cm, insbesondere von etwa zwischen 5 und 8 cm,
• eine Quer-Ausdehnung in einer ersten Richtung quer zur Rollachse (63) von maximal 10 cm, insbesondere von etwa zwischen 5 und 8 cm, und
• eine Tiefen-Ausdehnung in einer zweiten - zur ersten Richtung senkrechten - Richtung quer zur Rollachse (63) von maximal 7 cm, insbesondere von etwa zwischen 3 bis 6 cm.

7. Messhilfsmittel (50) nach einem der vorangehenden Ansprüche,
**dadurch gekennzeichnet, dass**
die visuellen Markierungen (52) rotationssymmetrisch um eine Rotationssymmetrieachse, die durch einen Mittelpunkt des Musters geht, und in zumindest zwei unterschiedlichen Abständen zu einer Ebene, die durch den Mittelpunkt und der Rotationssymmetrieachse als Normale aufgespannt wird, angeordnet sind,

8. Messhilfsmittel (50) nach Anspruch 7, wobei aktive Lichtpunkte die visuellen Markierungen (52) darstellen,
**dadurch gekennzeichnet, dass**
die elektronische Schaltung derart ausgebildet und konfiguriert ist, dass - in Abhängigkeit von einer Betätigung des ersten Bedienelements (54) - die visuellen Markierungen (52) zumindest teilweise automatisch im Rahmen einer Blinksequenz in einer definierten zeitlichen Abfolge und für definierte Zeiträume aktiviert werden, sodass diese blitzartig zu definierten Zeitpunkten - gemessen ab Betätigung des ersten Bedienelements (54) - blinken.

9. Messhilfsmittel (50) nach Ansprüchen 7 und 8,
**dadurch gekennzeichnet, dass**
die elektronische Schaltung derart ausgebildet und konfiguriert ist, dass im Rahmen der Blinksequenz zumindest teilweise unterschiedliche Markierungen der visuellen Markierungen (52) aktiviert werden und dadurch eine Gierwinkel-Absolutreferenz für eine stationsseitige Bestimmung eines Gierwinkels des Messhilfsmittels um die Symmetrieachse ableitbar gemacht ist.

10. Messhilfsmittel (50) nach Anspruch 9,
**dadurch gekennzeichnet, dass**
die elektronische Schaltung derart ausgebildet und konfiguriert ist, dass im Rahmen der Blinksequenz zunächst nur eine oder zwei direkt benachbarte der visuellen Markierungen (52) aktiviert und anschliessend jeweils alle der visuellen Markierungen aktiviert werden.

11. Messhilfsmittel (50) nach einem der vorangehenden Ansprüche, wobei aktive Lichtpunkte die visuellen Markierungen (52) darstellen,
**dadurch gekennzeichnet, dass**
die visuellen Markierungen (52) derart in zwei Gruppen, dass diese zwei konzentrische Muster bilden, aufgeteilt sind, die jeweils wahlweise aktivierbar und deaktivierbar sind, insbesondere wobei automatisch über eine Steuerschaltung des Messhilfsmittels in Reaktion auf Erhalt eines Signals via Kommunikationsmittel die zwei Gruppen wechselweise jeweils aktiviert bzw. deaktiviert werden.

12. System zur Vermessung von einer Objektoberfläche aus einem Messhilfsmittel (50) nach einem der vorangehenden Ansprüche und einem Lasertracker (10,11) zur Positions- und Orientierungsbestimmung des Messhilfsmittels (50).

13. System nach Anspruch 12, wobei der Lasertracker (10, 11) zur Ausrichtung eines Laserstrahls (17,21) auf den Retroreflektor (51) ausgebildet ist, wobei der Lasertracker (10, 11) zudem eine Kamera aufweist zur Aufnahme eines Bildes von dem Muster, und wobei der Lasertracker (10, 11) Funktionalitäten aufweist zur dreidimensionalen Bestimmung der Position des Retroreflektors (51) via Laserstrahl (17,21) und zur dreidimensionalen Bestimmung der Orientierung des Messhilfsmittels (50) via Auswertung des aufgenommenen Bildes von dem Muster.

## Claims

1. Handheld measuring aid (50) for use in a system - having a laser tracker (10,11) as station for position and orientation determination of the measuring aid - for surveying an object surface, having
- a body (62), wherein a rolling axis (63) is defined by the body (62) as the axis of the body (62) which corresponds to the direction of the greatest extension,
- visual markings (52), which are arranged in a defined spatial relationship, forming a pattern, on the body (62) in a marking region (58),
- a measuring probe (53), which is arranged on an orifice (55) of the body (62) in a defined spatial relationship in relation to the pattern, for the object surface, in particular having a ball to be used in a tactile manner for physically contacting a measurement point on the object surface,
- a retroreflector (51), arranged on the body (62) in a defined spatial relationship in relation to the pattern or the measuring probe, wherein the retroreflector can be targeted, tracked, and surveyed in position in three dimensions automatically with high precision by the laser tracker (10,11),
- a first operating element (54) actuatable by a user,
- an electronic circuit for generating a signal - occurring as a function of an actuation of the first operating element - which is indicative of a triggering of a position and orientation determination of the measuring aid (50) which can be carried out by the station, and
- wireless communication means for transmitting the signal to the station,
**characterized in that**
- the measuring aid (50) is designed with respect to overall dimensioning and weight distribution in such a manner and arrangement localities of the visual markings (52) on the body (62) are selected in such a manner,
- a first section (56) of the body (62) extending away from the orifice (55) is composed, shaped, and dimensioned in such a manner, and
- the first operating element (54) is arranged on the first section (56) of the body (62) in such a manner,
that the measuring aid (50) is provided in the measuring position to be held in one hand like a pen and in this case the first section (56) is used as a gripping region for at least thumb (65) and index finger (66), and in particular also middle finger (67), of the user, and also that in this measurement position the first operating element (54) is actuatable using the gripping thumb (65) or the gripping index finger (66),
wherein at least for index finger (66) and thumb (65) of the user a defined gripping surface is provided and the body (62) is designed in the first section (56) in its transverse dimensioning with respect to the rolling axis (63) such that this first section (56) can be clamped in the pen grip between index finger (66), thumb (65), and middle finger (67),
wherein the following sections of the measuring aid (50) follow one another in the following sequence along the rolling axis (63):
- measuring probe (53),
- orifice (55) having the first section (56) extending away therefrom, wherein a longitudinal extension between the gripping surfaces in the direction of the rolling axis (63) downward up to the orifice is at most between 2 and 4 cm,
- a second section (57), which essentially continues a dimensioning of the first section (56) transversely to the rolling axis (63), so that the first and second sections (56,57) together form an elongated pin section, which is insertable into a pocket hole having an opening of 3 cm diameter, and
- the marking region (58), wherein this has, at least in one transverse direction, a significantly greater extension transversely to the rolling axis (63) than the first and second sections (56,57).

2. Measuring aid (50) according to Claim 1,
**characterized in that** passive or active light spots acquirable by a camera represent the visual markings (52), in particular wherein the markings are formed by reflectors or by LEDs.

3. Measuring aid (50) according to Claim 1 or 2,
**characterized in that** the retroreflector (51) is configured as a hollow corner cube retroreflector and/or arranged in a center point of the pattern.

4. Measuring aid (50) according to any one of the preceding claims,
**characterized in that** the communication means are additionally implemented to receive signals transmitted from the station, in particular wherein the communication means have for this purpose a receiving diode (61) for detecting measuring radiation (17,21) emitted on the part of the station in the direction of the measuring aid (50), onto which the signals are modulated, especially wherein the receiving diode (61) is arranged closely adjacent to the retroreflector (51) or downstream from the retroreflector, which is implemented as partially radiation transparent for this purpose, in the measuring radiation propagation direction.

5. Measuring aid (50) according to any one of the preceding Claims,
**characterized in that** the pin section has a longitudinal extension in the direction of the rolling axis (63) of at most 15 cm, in particular of approximately between 7 and 12 cm.

6. Measuring aid (50) according to any one of the preceding Claims,
**characterized in that** the marking region (58) has
- a longitudinal extension in the direction of the rolling axis (63) of at most 10 cm, in particular of approximately between 5 and 8 cm,
- a transverse extension in a first direction transversely to the rolling axis (63) of at most 10 cm, in particular of approximately between 5 and 8 cm, and
- a depth extension in a second direction - perpendicular to the first direction - transversely to the rolling axis (63) of at most 7 cm, in particular of approximately between 3 to 6 cm.

7. Measuring aid (50) according to any one of the preceding claims,
**characterized in that** the visual markings (52) are arranged rotationally-symmetrically about an axis of rotational symmetry, which goes through a center point of the pattern, and in at least two different distances to a plane, which is spanned by the center point and the axis of rotational symmetry as the normal.

8. Measuring aid (50) according to Claim 7, wherein active light spots represent the visual markings (52),
**characterized in that** the electronic circuit is implemented and configured in such a manner that - as a function of an actuation of the first operating element (54) - the visual markings (52) are activated at least partially automatically in the scope of a flashing sequence in a defined chronological sequence and for defined periods of time, so that they flash like a flash at defined points in time - measured from actuation of the first operating element (54).

9. Measuring aid (50) according to Claims 7 and 8,
**characterized in that** the electronic circuit is implemented and configured in such a manner that in the scope of the flashing sequence, at least partially different markings of the visual markings (52) are activated and thus a yaw angle absolute reference is made derivable for a station-side determination of a yaw angle of the measuring aid about the axis of symmetry.

10. Measuring aid (50) according to Claim 9,
**characterized in that** the electronic circuit is implemented and configured in such a manner that in the scope of the flashing sequence, initially only one or two directly adjacent ones of the visual markings are activated and subsequently respectively all of the visual markings (52) are activated.

11. Measuring aid (50) according to any one of the preceding claims, wherein active light spots represent the visual markings (52),
**characterized in that** the visual markings (52) are allocated into two groups in such a manner that they form two concentric patterns, which are respectively optionally activatable and deactivatable, in particular wherein the two groups are alternately respectively activated or deactivated automatically via a control circuit of the measuring aid in reaction to receiving a signal via communication means.

12. System for surveying an object surface made of a measuring aid (50) according to any one of the preceding claims and a laser tracker (10,11) for position and orientation determination of the measuring aid (50).

13. System according to Claim 12, wherein the laser tracker (10,11) is implemented for aligning a laser beam (17,21) on the retroreflector (51), wherein the laser tracker (10,11) additionally has a camera for recording an image of the pattern, and wherein the laser tracker (10,11) has functionalities for the three-dimensional determination of the position of the retroreflector (51) via laser beam (17,21) and for the three-dimensional determination of the orientation of the measuring aid (50) via analysis of the recorded image of the pattern.

## Revendications

1. Accessoire de mesure portable (50) destiné à être utilisé dans un système - présentant un laser de poursuite (10, 11) comme station de détermination de position et d'orientation de l'accessoire de mesure - pour mesurer une surface d'objet, comprenant
• un corps (62), un axe de roulis (63) étant défini par le corps (62) comme l'axe du corps (62) qui correspond à la direction de plus grande extension,
• des repères visuels (52) qui sont disposés dans une relation spatiale définie formant un motif sur le corps (62) dans une zone de repérage (58),
• une sonde de mesure (53) pour la surface d'objet, qui est disposée au niveau d'un museau (55) du corps (62) dans une relation spatiale définie avec le motif, en particulier munie d'une bille à utiliser de manière tactile pour entrer en contact physique avec un point de mesure sur la surface d'objet,
• un rétroréflecteur (51) qui est disposé sur le corps (62) dans une relation spatiale définie avec le motif, respectivement la sonde de mesure, et qui peut être automatiquement visé, suivi et dont la position peut être mesurée dans les trois dimensions de manière très précise par le laser de poursuite (10, 11),
• un premier élément de commande (54) pouvant être actionné par un utilisateur,
• un circuit électronique pour générer un signal en fonction d'un actionnement du premier élément de commande, lequel signal est indicatif d'un déclenchement d'une détermination de position et d'orientation de l'accessoire de mesure (50) pouvant être effectuée par la station, et
• des moyens de communication sans fil pour envoyer le signal à la station,
**caractérisé en ce que**
• l'accessoire de mesure (50) est conçu, en ce qui concerne les dimensions totales et la répartition du poids, de telle sorte et que les localisations des repères visuels (52) sur le corps (62) sont choisies de telle sorte,
• une première partie (56) du corps (62) s'éloignant du museau (55) est conçue, formée et dimensionnée de telle sorte et
• le premier élément de commande (54) est disposé sur la première partie (56) du corps (62) de telle sorte
que l'accessoire de mesure (50) est prévu, dans la position de mesure, pour être tenu d'une main à la manière d'un stylo, la première partie (56) servant de zone de préhension pour au moins le pouce (65) et l'index (66), et en particulier aussi le majeur (67), de l'utilisateur, et que, dans cette position de mesure, le premier élément de commande (54) peut être actionné avec le pouce de préhension (65) ou l'index de préhension (66),
une surface de préhension définie étant prévue chaque fois au moins pour l'index (66) et le pouce (65) de l'utilisateur et le corps (62) étant conçu dans la première partie (56), en ce qui concerne son dimensionnement transversal par rapport à l'axe de roulis (63), de telle sorte que cette première partie (56) puisse être serrée entre l'index (66), le pouce (65) et le majeur (67) dans une prise de stylo,
les parties suivantes de l'accessoire de mesure (50) se succédant dans l'ordre suivant le long de l'axe de roulis (63) :
• sonde de mesure (53),
• museau (55) à partir duquel la première partie (56) s'étend, une extension longitudinale vers le bas dans la direction de l'axe de roulis (63) entre les surfaces de préhension et le museau étant prévue au maximum entre 2 et 4 cm,
• une deuxième partie (57) qui prolonge sensiblement un dimensionnement de la première partie (56) transversalement à l'axe de roulis (63), de sorte que les première et deuxième parties (56, 57) forment ensemble une partie en forme de tige allongée pouvant être introduite dans un trou borgne ayant une ouverture de 3 cm de diamètre, et
• la zone de repérage (58) qui présente, au moins dans une direction transversale, une extension sensiblement plus grande que les première et deuxième parties (56, 57) transversalement à l'axe de roulis (63).

2. Accessoire de mesure (50) selon la revendication 1,
**caractérisé en ce que**
des points lumineux passifs ou actifs détectables par une caméra représentent les repères visuels (52), en particulier les repères étant formés par des réflecteurs ou par des LED.

3. Accessoire de mesure (50) selon la revendication 1 ou 2,
**caractérisé en ce que**
le rétroréflecteur (51) est réalisé sous la forme d'un rétroréflecteur en coin de cube creux et/ou est disposé au centre du motif.

4. Accessoire de mesure (50) selon l'une des revendications précédentes,
**caractérisé en ce que**
les moyens de communication sont conçus en plus pour recevoir des signaux envoyés par la station, en particulier les moyens de communication présentant à cet effet une diode de réception (61) pour détecter un rayonnement de mesure (17, 21) émis par la station en direction de l'accessoire de mesure (50), sur lequel les signaux sont modulés, en particulier la diode de réception (61) étant disposée à proximité du rétroréflecteur (51) ou dans la direction de propagation du faisceau de mesure derrière le rétroréflecteur qui, à cet effet, est partiellement perméable au rayonnement.

5. Accessoire de mesure (50) selon l'une des revendications précédentes,
**caractérisé en ce que**
la partie en forme de tige présente une extension longitudinale dans la direction de l'axe de roulis (63) de 15 cm au maximum, en particulier d'environ 7 à 12 cm.

6. Accessoire de mesure (50) selon l'une des revendications précédentes,
**caractérisé en ce que**
la zone de repérage (58) présente
• une extension longitudinale dans la direction de l'axe de roulis (63) de 10 cm au maximum, en particulier d'environ 5 à 8 cm,
• une extension transversale dans une première direction transversale à l'axe de roulis (63) de 10 cm au maximum, en particulier d'environ 5 à 8 cm, et
• une extension en profondeur dans une deuxième direction transversale à l'axe de roulis (63) - perpendiculaire à la première direction - de 7 cm au maximum, en particulier d'environ 3 à 6 cm.

7. Accessoire de mesure (50) selon l'une des revendications précédentes,
**caractérisé en ce que**
les repères visuels (52) sont disposés à symétrie de révolution autour d'un axe de symétrie de révolution qui passe par un centre du motif et à au moins deux distances différentes d'un plan qui passe par le centre et l'axe de symétrie de révolution.

8. Accessoire de mesure (50) selon la revendication 7, dans lequel des points lumineux actifs représentent les repères visuels (52),
**caractérisé en ce que**
le circuit électronique est conçu et configuré de telle sorte que - en fonction d'un actionnement du premier élément de commande (54) - les repères visuels (52) sont activés au moins partiellement automatiquement dans le cadre d'une séquence de clignotement dans un ordre chronologique défini et pendant des durées définies, de sorte que ceux-ci clignotent par éclats à des instants définis, mesurés à partir de l'actionnement du premier élément de commande (54).

9. Accessoire de mesure (50) selon les revendications 7 et 8,
**caractérisé en ce que**
le circuit électronique est conçu et configuré de telle sorte que, dans le cadre de la séquence de clignotement, des repères au moins partiellement différents des repères visuels (52) sont activés et, de ce fait, une référence absolue d'angle de lacet pour une détermination par la station d'un angle de lacet de l'accessoire de mesure autour de l'axe de symétrie peut en être déduite.

10. Accessoire de mesure (50) selon la revendication 9,
**caractérisé en ce que**
le circuit électronique est conçu et configuré de telle sorte que, dans le cadre de la séquence de clignotement, seulement un ou deux repères visuels (52) directement adjacents sont d'abord activés et que tous les repères visuels sont chaque fois activés ensuite.

11. Accessoire de mesure (50) selon l'une des revendications précédentes, dans lequel des points lumineux actifs représentent les repères visuels (52),
**caractérisé en ce que**
les repères visuels (52) sont divisés en deux groupes de telle sorte qu'ils forment deux motifs concentriques, dont chacun peut être activé et désactivé sélectivement, en particulier les deux groupes étant alternativement activés et désactivés automatiquement par un circuit de commande de l'accessoire de mesure en réaction à la réception d'un signal via les moyens de communication.

12. Système de mesure d'une surface d'objet, formé d'un accessoire de mesure (50) selon l'une des revendications précédentes et d'un laser de poursuite (10, 11) pour déterminer la position et l'orientation de l'accessoire de mesure (50).

13. Système selon la revendication 12, dans lequel le laser de poursuite (10, 11) est conçu pour orienter un faisceau laser (17, 21) sur le rétroréflecteur (51), le laser de poursuite (10, 11) présentant en outre une caméra pour prendre une image du motif, et le laser de poursuite (10, 11) présentant des fonctionnalités pour la détermination tridimensionnelle de la position du rétroréflecteur (51) par le faisceau laser (17, 21) et pour la détermination tridimensionnelle de l'orientation de l'accessoire de mesure (50) par évaluation de l'image prise du motif.
